# EUROPEAN PATENT APPLICATION

(11) **EP 4 586 386 A1**
(43) Date of publication of application: **16.07.2025**
(21) Application number: 24860394.6
(22) Date of filing: 28.08.2024
(51) Int. Cl.: H01M 50/383, H01M 50/333, H01M 50/342, H01M 50/30, H01M 50/271, H01M 10/42, A62D 1/00, A62C 3/16, A62C 35/10

(54) **PACK CASE**

(30) Priority: 30.08.2023 KR 20230114714
(71) Applicant: LG Energy Solution, Ltd., Seoul 07335 (KR)
(72) Inventor: SHIN, Ju Hwan, Daejeon 34122 (KR); LEE, Hyoung Suk, Daejeon 34122 (KR)
(74) Representative: Plasseraud IP
(86) International application number: PCT/KR2024/012823
(87) International publication number: WO 2025/048474

(57) **Abstract**

A pack case includes a pack housing, and a lid covering an open top surface of the pack housing, wherein the fastener fixing the lid to the pack housing includes a venting mechanism configured to release pressure within the pack case in excess of a predetermined value to outside of the pack case.

## Description

### [Technical Field]

The present disclosure relates to a pack case that can maintain a sealed structure of lids constrained in a pack housing for a longer period of time in the event of thermal runaway.

This application claims priority to Korean Patent Application No. 10 - 2023 - 0114714 filed on August 30, 2023, and the disclosures of which are incorporated herein in their entirety by reference.

### [Background]

Secondary batteries, unlike primary batteries, are rechargeable and have been widely researched and developed in recent years due to the potential for miniaturization and large capacity. The demand for secondary batteries as an energy source is increasing rapidly due to the increasing technological development and demand for mobile devices, as well as electric vehicles and energy storage systems that are emerging in response to environmental protection needs.

Secondary batteries are categorized into coin type batteries, cylindrical batteries, prismatic batteries, and pouch type batteries according to the shape of the battery case. In a secondary battery, an electrode assembly mounted inside the battery case is a chargeable and dischargeable power generating device comprising a stacked structure of electrodes and separators.

Since secondary batteries are demanded to be used continuously for a long period of time, it is necessary to effectively control the heat generated during the charging and discharging process. If the secondary battery is not properly cooled, the increase in temperature will cause an increase in current, which will cause an increase in current, which will again cause an increase in temperature, which will cause a chain reaction, eventually leading to the catastrophic condition of thermal runaway.

In addition, if the secondary batteries are grouped in the form of modules or packs, thermal runaway caused by one secondary battery will cause the other secondary batteries in the vicinity to continuously overheat, resulting in the phenomenon of thermal propagation. In other words, when a thermal runaway occurs in a battery module in a battery pack, a large amount of conductive dust, gas, and flame are emitted from the high-voltage terminals of the battery module, which causes dust to accumulate on the high-voltage terminals of other neighboring battery modules and triggers the phenomenon of thermal propagation by heat transfer by gas and flame.

When thermal propagation occurs in a battery pack, the pressure and temperature inside the battery pack increase rapidly. In response to such pressure and temperature rapid increases, the battery pack should maintain its structural robustness for a considerable period of time. If the battery pack has a structural collapse and outside air flows in inside, the combustion reaction is rapidly activated, resulting in significant risks such as fire, explosion, etc. outside the pack.

In a structure that covers and constrains the lids with respect to the pack housing of the battery pack, there is a limitation to the increase in volume inside the battery pack, and when an event such as thermal propagation occurs, there is no immediate pressure release, and the pack structure may collapse before the operation of the venting device, leading to flames being ejected outside.

The suppression and delay of thermal propagation are critical, particularly in electric vehicles, where they are directly related to life-threatening accidents, and the regulations regarding this matter are becoming increasingly stringent. In other words, to allow sufficient time for emergency evacuation and safety measures after thermal runaway occurs, it is required that there is a sufficient time delay before the structural collapse of the battery pack occurs. Therefore, it is necessary to develop methods to ensure that the lids confined in the pack housing can maintain the sealed structure for a sufficient period of time.

### [Summary]

### [Technical Problem]

An object of the present disclosure is to provide a pack case in which, in a pack case of a structure in which a lid is constrained with respect to a pack housing, when an event of thermal runaway or thermal propagation occurs and causes a rapid increase in internal pressure, the internal pressure can be appropriately relieved before the lid exceeds the limit of volume expansion, thereby preventing collapse of the pack case and securing time for a venting device to operate.

However, the technical problem to be solved by the present disclosure is not limited to the above-described problem, and other problems not mentioned can be clearly understood by a person skilled in the art from the description of the disclosure described below.

### [Technical Solution]

The present disclosure relates to a pack case, in one example, including a pack housing, a lid covering an open top surface of the pack housing, wherein the fastener fixing the lid to the pack housing includes a venting mechanism configured to release pressure within the pack case in excess of a predetermined value to outside of the pack case.

In one embodiment of the present disclosure, the lid may be screwed to the pack housing by the fastener.

The fastener may be engaged to at least one of a center beam or a cross beam traversing an interior of the pack housing.

The fastener may comprise a pressure inlet in communication with a space between an inner surface of the lid and at least one of the center beam or the cross beam, and a pressure outlet on a head projecting from an outer surface of the lid and in communication with the pressure inlet.

The lid may be fixed to a side frame of the pack housing along an edge, wherein the fastener is configured to restrain the lid from deviating from the pack housing.

Moreover, the pack housing includes at least one venting mechanism, wherein the venting mechanism in the fastener is configured to operate at a pressure lower than an operating pressure of the venting device.

In one embodiment, the venting mechanism may be a valve mechanism between the pressure inlet and the pressure outlet in an interior of the fastener and may be configured to be opened and closed by a spring.

Alternatively, the venting mechanism may be a rupture disk between the pressure inlet and the pressure outlet in an interior of the fastener.

In addition, the venting mechanism may further include a mesh member between the pressure inlet and the rupture disk.

In addition, the space between the rupture disk and the mesh member may comprise a capsule sealed with a liquid fire extinguishing agent.

The capsule may be configured to be ruptured by vaporization of the liquid fire extinguishing agent.

The capsule may be configured to be ruptured before the rupture disk ruptures.

For example, the liquid fire extinguishing agent may be a fluorinated ketone.

According to the pack case of the present disclosure as described above, when the relatively thin lid expands and undergoes volume expansion as the internal pressure of the pack increases, the venting mechanism embedded in the fastener releases the pressure before the limit of the volume expansion is reached and the structure of the lid collapses. Therefore, in an event of a thermal runaway or thermal propagation, the structural collapse of the lid is delayed and suppressed.

In addition, since the venting mechanism embedded in the fastener is configured to operate before the venting device provided in the pack housing, even in a situation in which the venting device is not able to operate due to an instantaneous rapid increase in internal pressure, the venting mechanism of the fastener operates first, thereby preventing damage of the pack case and securing a sufficient time for the venting device to operate normally.

However, the technical effects that can be obtained through the present disclosure is not limited to the above-described effects, and other effects not mentioned can be clearly understood by a person skilled in the art from the description of the disclosure described below.

### [Brief Description of the Drawings]

Because the following drawings attached to the present specification illustrate exemplary embodiments of the present disclosure and serve to facilitate understanding of the technical idea of the present disclosure together with the detailed description of the disclosure described below, the present disclosure should not be limitedly interpreted on the basis of the drawings.
FIG. 1 is a drawing illustrating a pack case according to one embodiment of the present disclosure.
FIG. 2 is an exploded perspective view of a pack case.
FIG. 3 is a cross-sectional view along "A-A" line of FIG. 1.
FIG. 4 is an enlarged view of the "B" portion of FIG. 3.
FIG. 5 is a drawing illustrating a fastener of another embodiment.
FIGS. 6 and 7 are drawings illustrating modified embodiments of the fastener shown in FIG. 5, respectively.

[Best Mode] The present disclosure may have various modifications and various embodiments, and thus specific embodiments thereof will be described in detail below.

However, it should be understood that the present disclosure is not limited to the specific embodiments, and includes all modifications, equivalents, or alternatives within the spirit and technical scope of the present disclosure.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present disclosure, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

The present disclosure relates to a pack case, in one example, including a pack housing, a lid covering an open top surface of the pack housing, wherein the fastener fixing the lid to the pack housing includes a venting mechanism for releasing pressure within the pack in excess of a predetermined value to the outside.

Moreover, the pack housing is provided with at least one venting mechanism, wherein the venting mechanism embedded in the fastener can operate at a pressure lower than an operating pressure of the venting device.

According to the pack case of the present disclosure as described above, when the relatively thin lid expands and undergoes volume expansion as the internal pressure of the pack increases, the venting mechanism embedded in the fastener releases the pressure before the limit of the volume expansion is reached and the structure of the lid collapses. Therefore, in the event of a thermal propagation, the structural collapse of the lid is delayed and suppressed.

In addition, since the venting mechanism embedded in the fastener is configured to operate before the venting device provided in the pack housing, even in a situation in which the venting device is not able to operate due to an instantaneous rapid increase in internal pressure, the venting mechanism of the fastener operates first, thereby preventing damage of the pack case and securing a sufficient time for the venting device to operate normally.

### [Detailed Description]

Hereinafter, specific embodiments of a pack case 10 according to the present disclosure will be described in detail with reference to the accompanying drawings. For reference, the directions of front, back, up, down, left, and right used in the following description to designate relative positions are for the purpose of understanding the disclosure and refer to the directions shown in the drawings unless otherwise specified.

### [first embodiment]

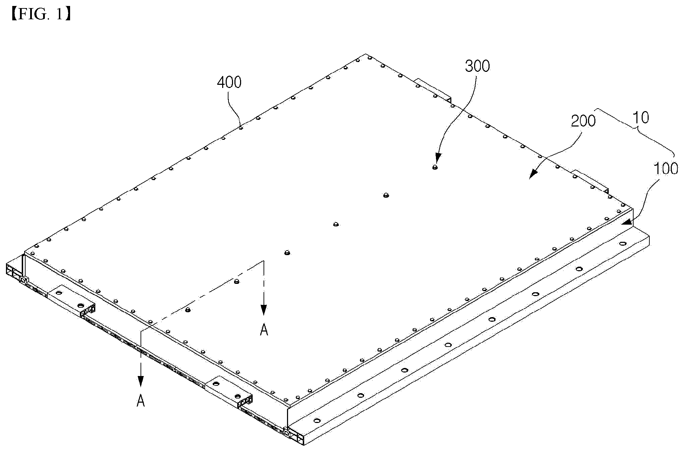

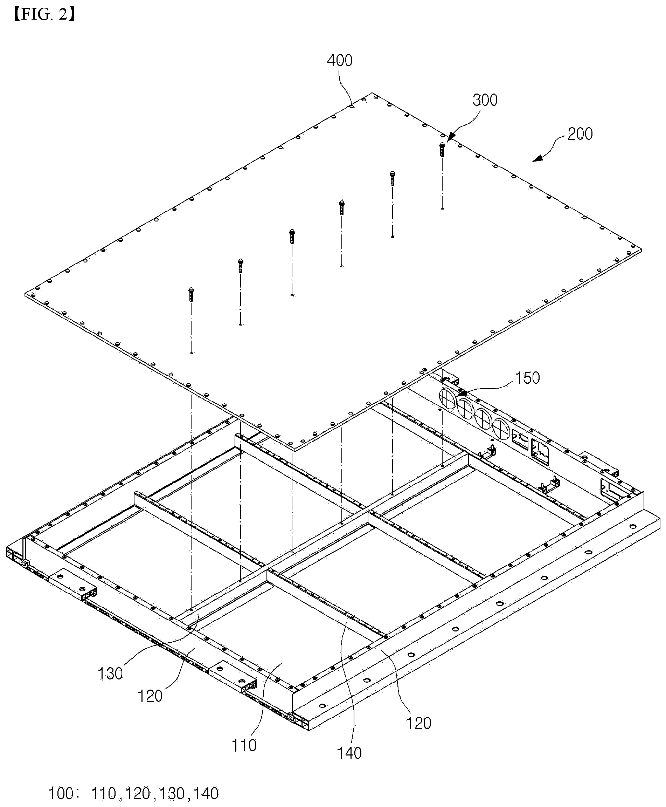

FIG. 1 is a drawing illustrating a pack case according to one embodiment of the present disclosure, and FIG. 2 is an exploded perspective view of a pack case. Referring to FIGS. 1 and 2, a pack case 10 of the present disclosure includes a pack housing 100, a lid 200, and a fastener 300.

The pack housing 100 forms a space that accommodates at least one, preferably a plurality of battery modules (not shown). The pack housing 100 includes a base plate 110 forming a bottom surface, and a plurality of side frames 120 forming wall surfaces in all directions.

In addition, the pack housing 100 includes a center beam 130 and/or a cross beam 140 forming a plurality of spaces separately accommodating a plurality of battery modules. The center beam 130 and cross beam 140 serve to divide the accommodated spaces for the battery modules, meanwhile, reinforcing the overall rigidity of the pack case 10. As will be described later, in the pack case 10 of the present disclosure, the height of the center beam 130 and/or cross beam 140 is formed low compared to the height of the side frame 120.

The lid 200 refers to a member that serves as a cover that covers the open top surface of the pack housing 100. The closure or sealing of the pack housing 100 is completed by the lid 200. The lid 200 has a low stiffness compared to the base plate 110, side frame 120, center beam 130 and cross beam 140 that comprise the pack housing 100. Conventionally, the lid 200 is made of a relatively thin sheet material. As a result of the relatively low stiffness of the lid 200, an increase in the internal pressure of the pack case 10 causes the lid 200 to deform in an expansion, thereby having the effect of expanding the space inside the pack case 10. By such volume expansion, the initial rapid increase in pressure during a thermal runaway or thermal propagation event is partially mitigated.

However, there are obviously limitations to the volume expansion of the lid 200 constrained to the pack housing 100, and thus, before the constraint of the lid 200 is broken, the venting device 150 provided in the pack housing 100 should operate to release the excessively increased internal pressure. However, in some cases, there may be a time delay before the venting device 150 is operated, which may result in an explosion of the battery pack caused by the lid 200 rupturing because it has not been able to withstand the pressure.

The pack case 10 of the present disclosure ensures that the lid 200 maintains a good constraint by appropriately releasing pressure before the venting device 150 of the pack housing 100 is operated. For this, a pressure release function is assigned to the fastener 300 that fix the lid 200 with respect to the pack housing 100. In other words, the fastener 300 that fixes the lid 200 with respect to the pack housing 100 include a venting mechanism 310 that releases pressure in the pack that exceeds a predetermined value to the outside.

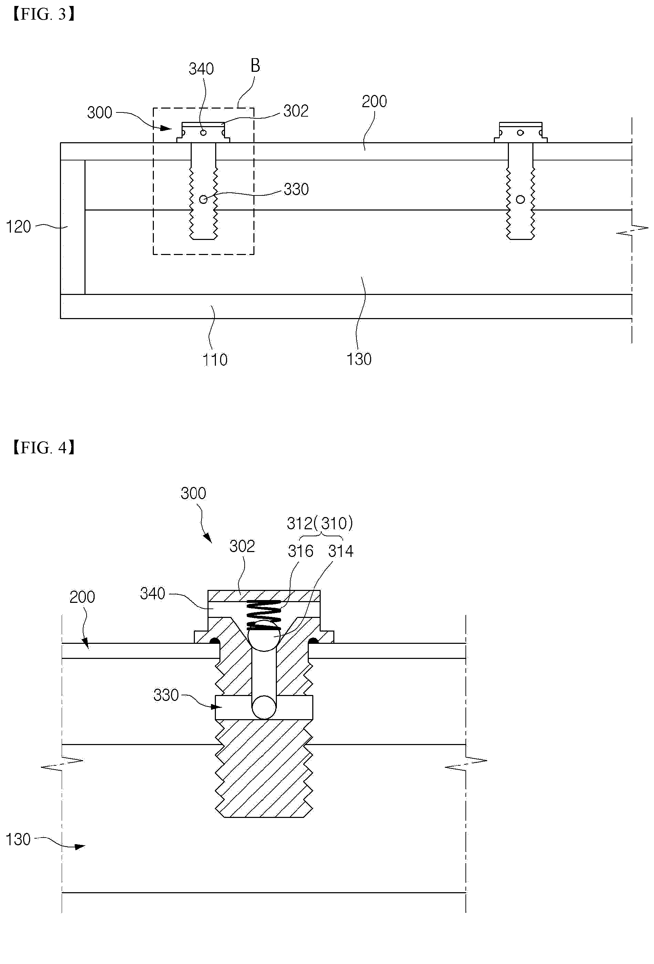

FIG. 3 is a cross-sectional view along "A-A" line of FIG. 1. FIG. 4 is an enlarged view of the "B" portion of FIG. 3. In one embodiment of the present disclosure, the fastener 300 may fix the lid 200 to the pack housing 100 by screw engagement. In particular, the fastener 300 may be engaged to a center beam 130 and/or a cross beam 140 traversing the interior of the pack housing 100.

Referring to FIG. 2, the lid 200 is fixed to the side frame 120 of the pack housing 100 along an edge thereof. By a plurality of bolts 400 that penetrate and engage the side frame 120 along an edge of the lid 200, the lid 200 is adhered and fixed to the pack housing 100. On the other hand, the fastener 300 that fix the lid 200 to the center beam 130 and/or the cross beam 140 has a slight space formed between the inner surface of the lid 200 and the center beam 130 and/or the cross beam 140 to allow pressure within the pack to act on the venting mechanism 310 embedded therein. In other words, the height of the center beam 130 and/or the cross beam 140 is low compared to the side frame 120, and accordingly, the inner surface of the lid 200 is not adhered to the center beam 130 and/or the cross beam 140. In this respect, the fastener 300 does not closely fix the lid 200 with respect to the center beam 130 and/or the cross beam 140 but may restrain the lid 200 from deviating from the pack housing 100.

Referring to FIGS. 3 and 4, the fastener 300 comprises a pressure inlet 330 in communication with the space formed by the inner surface of the lid 200 with respect to the center beam 130 and/or the cross beam 140, and a pressure outlet 340 provided on a head 302 projecting from the outer surface of the lid 200 and in communication with the pressure inlet 330 in the inner side. Further, the venting mechanism 310 is disposed between the pressure inlet 330 and the pressure outlet 340, the venting mechanism 310 of the illustrated embodiment comprising a valve mechanism 312 that is opened and closed by a spring 316. The valve mechanism 312 in the drawings includes a ball valve 314 and the spring 316, and when a pressure exceeding a set preload on the spring 316 is applied from the pressure inlet 330, the ball valve 314 moves to open the pressure outlet 340.

Further, the pack housing 100 is provided with at least one venting device 150, wherein the venting mechanism 310 embedded in the fastener 300 can operate at a pressure lower than the operating pressure of the venting device 150. **In** other words, the venting mechanism 310 embedded in the fastener 300 operates before the venting device 150 when the pressure in the pack increases. Accordingly, the pressure in the pack is partially relieved and released by the volume expansion of the lid 200 and the operation of the venting mechanism 310, thereby restraining the structural collapse of the pack case 10 for a predetermined period of time, during which time the venting device 150 starts to operate and the pressure in the pack is released smoothly.

### [second embodiment]

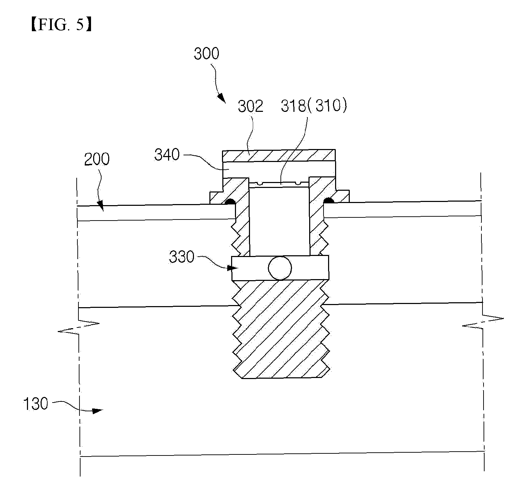

FIG. 5 is a drawing illustrating a fastener of another embodiment. **In** the embodiment of FIG. 5, the venting mechanism 310 comprises a rupture disk 318 disposed between a pressure inlet 330 and a pressure outlet 340 in the interior of the fastener 300.

The rupture disk 318 is a thin plate-shaped member of a metal material, having a notched part formed on its surface through a notch processing. When thermal runaway occurs within the pack case 10, increasing the pressure, this pressure acts on the pressure inlet 330 of the fastener 300. The pressure conveyed from the pressure inlet 330 causes tensile strain across the rupture disk 318 with a fixed edge in the interior of the fastener 300, causing the notched part with low strength to tear, opening the pressure outlet 340.

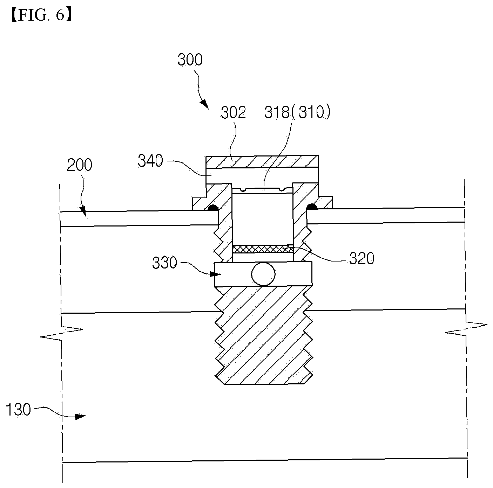

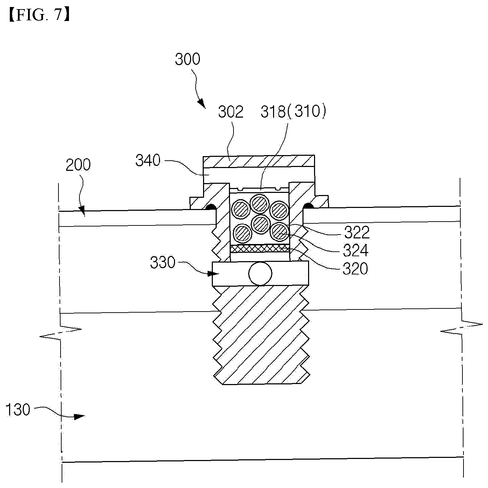

FIGS. 6 and 7 are drawings illustrating modified embodiments of the fastener shown in FIG. 5, respectively. According to the embodiment of FIG. 6, the venting mechanism 310 may further include a mesh member 320 installed between the pressure inlet 330 and the rupture disk 318. The mesh member 320 refers to a sheet-shaped structure having a plurality of small holes and can perform a filtering function. In other words, by covering the pressure outlet 340 upstream of the venting mechanism 310 with the mesh member 320, high-temperature particles mixed in the venting gas are filtered by the mesh member 320 and are not released outside. In particular, since high-temperature particles exceeding a certain size serve as an ignition source for an external fire, filtering by the mesh member 320 can effectively eliminate the cause of an external ignition. It should be noted that the eye size of the mesh member 320 shown is exaggerated for clarity, and of course, the mesh member 320 may be formed with a smaller eye size than this.

Further, the mesh member 320 may be provided as a porous member made of a thermally conductive material. This is in addition to a filtering function, but also a flame extinguishing function. The porous mesh member 320 of the thermally conductive material absorbs heat generated by the gas mixture being burned and dissipates it to the surroundings, thereby lowering the combustion temperature so that the surrounding gases do not reach the spontaneous ignition temperature. This is because the high temperature gas loses heat to the thermally conductive porous structure as it passes through the mesh member 320. Therefore, as the flame generated by the thermal runaway generated within the pack case 10 passes through the mesh member 320 disposed upstream of the pressure outlet 340 of the venting mechanism 310, the flame loses an amount of heat that it can no longer maintain, thereby restraining thermal propagation or an external fire.

Further, as in the embodiment shown in FIG. 7, the space formed between the rupture disk 318 and the mesh member 320 may be provided with a capsule 322 sealing a liquid fire extinguishing agent 324. The capsule 322 may rupture from the interior as the sealed liquid fire extinguishing agent 324 absorbs heat from the high temperature gas and vaporizes thereby, resulting in a rapid volume expansion.

By providing the capsule 322 sealing the liquid fire extinguishing agent 324 within the fastener 300, a rapid response to a fire caused by a thermal runaway event is made possible in the beginning of the fire. By using the liquid fire extinguishing agent 324, it is possible to expect an effective fire extinguishing function while occupying a small space, since it explosively expands in volume during the vaporization process. For effective fire extinguishing, it may be preferable for the capsule 322 to rupture before the rupture disk 318. By appropriately selecting the material of the capsule 322, it can be designed to sufficiently vaporize the liquid fire extinguishing agent 324 at temperatures below the pressure level at which the rupture disk 318 ruptures. By rupture of the capsule 322 before the rupture disk 318, the fire extinguishing action may be more effective while the sealing of the interior of the pack case 10 is maintained.

In the embodiment of FIG. 7, the liquid fire extinguishing agent 324 may be a fluorinated ketone. Fluorinated ketone is a substance artificially made by replacing a hydrogen atom in a ketone with fluorine, and is colorless and odorless, and its viscosity is almost the same as water, so it is easy to put in the capsule 322, and its insulation strength is twice or more than that of nitrogen because of fluorine having a stable property, so it does not conduct electricity and does not cause a reaction such as oxidation with a substance with which it comes into contact, and its surface tension is very small, so it spreads well without forming droplets when it comes into contact with an object, so it is very appropriate for fire extinguishing. In addition, fluorinated ketones are non-toxic and harmless to the human body and are an effective fire extinguishing agent that quickly evaporates upon contact with fire or smoke, rapidly removing heat, and are more environmentally friendly than conventional fire extinguishing substances because they do not leave any residue after evaporation. In particular, the non-conductivity because of the stability of fluorine is appropriate for responding to fires caused by thermal runaway of secondary batteries.

However, since fluorinated ketones have a boiling point of 49°C, which is much lower than water, they exist as a liquid at room temperature but vaporize quickly when the temperature increases. Therefore, it is necessary to design the material, thickness, and the like of the capsule 322 containing the liquid fluorinated ketone so that it acts as an appropriate insulation material.

As aforementioned, the present disclosure has been described in more detail through the drawings and embodiments. However, since the configuration described in the drawings or embodiments described herein is merely one embodiment of the present disclosure and do not represent the overall technical spirit of the disclosure, it should be understood that the disclosure covers various equivalents, modifications, and substitutions at the time of filing of this application.

### [Description of Reference Numerals]

10: pack case
100: pack housing
110: base plate
120: side frame
130: center beam
140: cross beam
150: venting device
200: lid
300: fastener
302: head
310: venting mechanism
312: valve mechanism
314: ball valve
316: spring
318: rupture disk
320: mesh member
322: capsule
324: liquid fire extinguishing agent
330: pressure inlet
340: pressure outlet
400: bolt

## Claims

1. A pack case, comprising:
a pack housing; and
a lid covering an open top surface of the pack housing,
wherein a fastener fixing the lid to the pack housing comprises a venting mechanism configured to release pressure within the pack case in excess of a predetermined value to outside of the pack case.

2. The pack case of claim 1, wherein the lid is screwed to the pack housing by the fastener.

3. The pack case of claim 2, wherein the fastener is engaged to at least one of a center beam or a cross beam traversing an interior of the pack housing.

4. The pack case of claim 3, wherein the fastener comprises:
a pressure inlet in communication with a space between an inner surface of the lid and at least one of the center beam or the cross beam, and
a pressure outlet on a head of the fastener projecting from an outer surface of the lid and in communication with the pressure inlet in an interior of the fastener.

5. The pack case of claim 4, wherein the lid is fixed to a side frame of the pack housing along an edge,
wherein the fastener is configured to restrain the lid from deviating from the pack case.

6. The pack case of claim 1, wherein the pack housing includes at least one venting device,
wherein the venting mechanism in the fastener is configured to operate at a pressure lower than an operating pressure of the venting device.

7. The pack case of claim 6, wherein the venting mechanism is a valve mechanism between the pressure inlet and the pressure outlet in an interior of the fastener, and is configured to be opened and closed by a spring.

8. The pack case of claim 6, wherein the venting mechanism is a rupture disk between the pressure inlet and the pressure outlet in an interior of the fastener.

9. The pack case of claim 8, wherein the venting mechanism further comprises a mesh member between the pressure inlet and the rupture disk.

10. The pack case of claim 9, wherein the space between the rupture disk and the mesh member comprises a capsule sealed with a liquid fire extinguishing agent.

11. The pack case of claim 10, wherein the capsule is configured to be ruptured by vaporization of the liquid fire extinguishing agent.

12. The pack case of claim 11, wherein the capsule is configured to be ruptured before the rupture disk ruptures.

13. The pack case of claim 12, wherein the liquid fire extinguishing agent is a fluorinated ketone.
